# EUROPÄISCHE PATENTANMELDUNG

(11) **EP 4 834 806 A1**
(43) Veröffentlichungstag der Anmeldung: **04.11.2026**
(21) Anmeldenummer: 25173692.2
(22) Anmeldetag: 30.04.2025
(51) Int. Cl.: B65G 21/20, B65G 47/52, B65G 47/86

(54) **VERSATZVORRICHTUNG, TRANSPORTVORRICHTUNG, TRANSPORTSYSTEM SOWIE VERFAHREN**

(71) Anmelder: Tyrolon GmbH, 6395 Hochfilzen (AT)
(72) Erfinder: Krieg, Andreas, 67596 Dittelsheim-Heßloch (DE); Mayer, Peter, 6395 Hochfilzen (AT)
(74) Vertreter: Meissner Bolte Partnerschaft mbB

(57) **Zusammenfassung**

Die Erfindung beschreibt eine Versatzvorrichtung (10) zum Versetzen von Behältern (12), insbesondere flaschenartigen Behältern (12), von einem Förderband (82) eines Transportsystems (80) aus einer Transportrichtung (TR) der Behälter (12), wobei die Versatzvorrichtung (10) ein drehbares Laufrad (14) und eine Halteeinheit (16) aufweist, wobei zwischen dem drehbaren Laufrad (14) und der Halteeinheit (16) ein Versatzpfad (VP) mit einem Einlaufabschnitt (18), einem Versatzabschnitt (20) und einen Auslaufabschnitt (22) zum Versetzen der Behälter (12) von dem Förderband (82) definiert ist,
wobei in einem Versatzvorgang die Behälter (12) zwischen der Halteeinheit (16) und dem Laufrad (14) radial in einem Halteabstand (HA) haltbar sind, und
wobei das Laufrad (14) und die Halteeinheit derart angeordnet sind, um die Behälter (12) von dem Einlaufabschnitt (18) in den Versatzabschnitt (20) und von dem Versatzabschnitt (20) in den Auslaufabschnitt (22) zu führen, wobei der Versatzabschnitt (20) in einem Versatzabstand (VA), insbesondere parallel versetzt, zu einer Verbindunglinie (VL) zwischen dem Einlaufabschnitt (18) und dem Auslaufabschnitt (22) angeordnet ist, und wobei die Verbindungslinie (VL) über dem Förderband (82) des Transportsystems anordenbar und der Versatzabschnitt außerhalb des Förderbandes anordenbar ist.

## Beschreibung

Die vorliegende Erfindung betrifft eine Versatzvorrichtung zum Versetzen von Behältern, insbesondere flaschenartigen Behältern, von einem Förderband eines Transportsystems, eine Transportvorrichtung zum Transportieren von Behältern, sowie ein Transportsystem zum Transportieren von Behältern, insbesondere flaschenartigen Behältern. Des Weiteren betrifft die Erfindung ein Verfahren zum Aussortieren defekter Behälter mittels eines Transportsystems.

In einer modernen Befüllanlage für Mehrwegflaschen spielt der Transport der Flaschen zwischen den verschiedenen Stationen bzw. Transportvorrichtungen eine entscheidende Rolle.

Eine derartige Transportvorrichtung zum Greifen, Halten, Führen und/oder Transportieren von insbesondere flaschenartigen Behältern ist bereits aus dem Stand der Technik, insbesondere unter der Bezeichnung "Klammerstern", bekannt und wird bei der fließbandmäßigen Verarbeitung und Handhabung von Behältern eingesetzt. Die Transportvorrichtung weist in der Regel eine Trägerplatte als Basis auf, an der bzw. auf der einzelne Greifvorrichtungen über den Umfang verteilt angebracht sind. In einem automatischen Reinigungs-, Abfüll- oder Etikettiervorgang werden in der Regel mehrere solcher Transportvorrichtungen eingesetzt.

Unter dem Begriff "Behälter" sind im Zusammenhang mit der vorliegenden Erfindung insbesondere, aber nicht ausschließlich, Behälter mit einem im wesentlichen kreisförmigen Querschnitt zu verstehen, z.B. Flaschen oder Dosen oder Gläser, die jeweils in üblicher Weise aus Glas, Metall oder Kunststoff bestehen können. Unter dem Begriff "im Wesentlichen kreisförmig" sind im Zusammenhang mit der vorliegenden Erfindung nicht ausschließlich im geometrischen Sinne rund geformte Behälter zu verstehen, sondern beispielsweise auch ovale, regelmäßig mehreckige usw., die dann insbesondere einen im Wesentlichen kreisförmigen, aber beispielsweise auch ovalen oder mehreckigen Querschnitt aufweisen.

Eine oder mehrere Transportvorrichtungen werden u.a. in einem Prozessablauf zum Reinigen und Befüllen von Behältern verwendet, bei dem die Transportvorrichtungen örtlich so positioniert und eingestellt sind, dass sie die Behälter von Förderbändern aufnehmen und zur nächsten Station, z.B. einer Füll- oder Reinigungsanlage und von dort z.B. zu einer Etikettierstation transportieren. Zu diesem Zweck weist eine Transportvorrichtung Greifeinrichtungen zum Erfassen, Halten und/oder Führen von insbesondere flaschenartigen Behältern auf, die auf einer mit einer Antriebswelle drehbaren Trägerplatte angeordnet und befestigt sind. Eine solche Greifvorrichtung oder Greifeinheit für ein Behältertransportsystem weist mindestens ein Greifarmpaar mit zwei Greifarmen auf und kann zwischen einer Greifstellung und einer Öffnungsstellung wechseln. Zum Transport eines Behälters greifen die Greifarme in der Regel unter den Halsring oder bei Flaschen um den Bauch des Behälters. Dabei dient ein Steuernocken als Öffnungsmittel und eine Schraubenfeder oder ein Magnetpaar als Schließmittel der Greifeinrichtung. Der Steuernocken einer Greifeinrichtung wird über eine Schaltklaue als Betätigungsmittel angesteuert, mit deren Hilfe die Greifeinrichtung geöffnet und geschlossen werden kann.

Zur gründlichen Reinigung durchläuft jede Flasche einen Reinigungsprozess. Während diesem werden die Behälter mit Wasser und Reinigungsmittel gespült und einem thermischen Prozess ausgesetzt. Bei Mehrwegflaschen können die hohen Temperaturen bzw. die Temperaturschwankungen im Laufe ihres Lebenszyklus zu einem gewissen Verschleiß führen.

Demnach kann es durch die wiederholte Verwendung der Mehrwegflaschen zu Materialermüdung kommen, so dass es aufgrund der Temperaturschwankungen zu Spannungen in der Flasche kommen kann, und Brüche entstehen. Oft bleiben die beschädigten Flaschen während des Transports in dem Transportsystem bzw. der Befüllanlage zunächst zusammen, was zwar kurzfristig das Problem kaschiert, jedoch langfristige Konsequenzen hat. Wenn schließlich der Boden abbricht, entstehen gefährliche Scherben, die in die Maschinen gelangen und dort erhebliche Schäden verursachen können.

Es ist daher Aufgabe der Erfindung eine Versatzvorrichtung zum Versetzen von Behältern zur Verfügung zu stellen, um beschädigte Behälter oder Flaschen teilweise aus dem Transportsystem zu entfernen. Des Weiteren ist die Aufgabe der Erfindung, eine Transportvorrichtung eingangs genannter Art dahingehend zu konzipieren, dass die Transportvorrichtung die beschädigten Behälter erkennt und aussortiert. Ferner ist es eine Aufgabe der Erfindung, ein Transportsystem zur Verfügung zu stellen, welches Teile der defekten Behälter entfernt und die defekten Behälter erkennt und aussortiert. Des Weiteren ist es die Aufgabe der Erfindung, ein Verfahren zum Aussortieren defekter Behälter zur Verfügung zu stellen.

Diese Aufgabe wird erfindungsgemäß mit einer Versatzvorrichtung mit den Merkmalen des Anspruchs 1, einer Transportvorrichtung mit den Merkmalen des Anspruchs 10, einem Transportsystem mit den Merkmalen des Anspruchs 14 und einem Verfahren mit den Merkmalen des Anspruchs 15 gelöst.

Ein erster Aspekt der Erfindung betrifft eine Versatzvorrichtung zum Versetzen von Behältern, insbesondere flaschenartigen Behältern, von einem Förderband eines Transportsystems, insbesondere aus einer Transportrichtung der Behälter. Als Transportrichtung wird vorliegend der Weg verstanden, den der Behälter bzw. die Behälter innerhalb des Transportsystems von einem Startpunkt zu einem Zielpunkt zurücklegt bzw. zurücklegen. Die Versatzvorrichtung umfasst ein drehbares Laufrad und eine Halteeinheit. Dabei ist zwischen dem drehbaren Laufrad und der Halteeinheit ein Versatzpfad mit einem Einlaufabschnitt, einem Versatzabschnitt und einen Auslaufabschnitt zum Versetzen der Behälter von dem Förderband definiert.

In einem Versatzvorgang sind die Behälter zwischen der Halteeinheit und dem Laufrad radial in einem Halteabstand haltbar, wobei das Laufrad und die Halteeinheit derart angeordnet sind, um die Behälter von dem Einlaufabschnitt in den Versatzabschnitt und von dem Versatzabschnitt in den Auslaufabschnitt zu führen. Dabei ist der Versatzabschnitt in einem Versatzabstand, insbesondere parallel versetzt, zu einer Verbindunglinie zwischen dem Einlaufabschnitt und Auslaufabschnitt angeordnet. Die Verbindungslinie ist dabei über dem Förderband des Transportsystems anordenbar und der Versatzabschnitt ist außerhalb des Förderbandes anordenbar.

Der Halteabstand kann dabei insbesondere auf die zu versetzenden Behälter einstellbar sein, um während des eines Versatzvorgangs die Behälter zwischen der Halteeinheit und dem drehbaren Laufrad mittels einer Haltekraft zu halten.

Dies ermöglicht ein sicheres, gleichmäßiges und kontinuierliches Versetzen der Behälter in ihrer Transportrichtung. Durch den Versatz um den Versatzabstand im Versatzabschnitt werden die Behälter parallel zum Förderband versetzt, so dass sich die Behälter in dem Versatzabschnitt außerhalb des Förderbands befinden. Befindet sich in dem Behälterstrom ein defekter Behälter, so kann der defekte Teil, z.B. ein Bodenteil eines Behälters, aufgrund der Schwerkraft im Versatzabschnitt, also neben dem Förderband,abfallen. Dies reduziert Schäden an den darauffolgenden Vorrichtungen des Transportsystems, da die beschädigten Teile bewusst und gesteuert entfernt werden und somit nicht in die weiteren Vorrichtungen fallen. Dies reduziert zum einen Kosten und zum anderen Stillstandzeiten, um Scherben oder ähnliches aus dem Transportsystem zu entfernen.

Der zwischen dem ersten Riemenabschnitt und dem drehbaren Laufrad gehaltene Teil des defekten Behälters verbleibt im Behälterstrom und wird im Auslaufabschnitt wieder auf das Förderband geführt. Das Verbleiben eines Teils des defekten Behälters im Behälterstrom führt zur Stabilität des Behälterstroms.

In einer vorteilhaften Ausgestaltung weist die Halteeinheit der Versatzvorrichtung eine Riemeneinheit mit einem Riemen und zumindest einer ersten und einer zweiten Umlenkeinheit auf. Die Umlenkeinheiten können durch Umlenkrollen gebildet sein. Dabei kann ein erster Riemenabschnitt des Riemens, welcher dem Laufrad zugeordneter ist, zwischen der zumindest einen ersten und zweiten Umlenkeinheit radial in dem Halteabstand zu dem drehbaren Laufrad anordenbar sein.

Eine Riemeneinheit bietet eine effiziente und flexible Kraftübertragung der Haltekraft zum Halten der Behälter während des Versatzvorgangs. Sie ist wartungsfreundlich und leicht, was zu Kosteneinsparungen und einfacherer Handhabung führt.

In einer weiteren Ausgestaltung ist in der Verssatzvorrichtung ein Riemenspanner vorgesehen. Dabei ist der Riemenspanner ausgelegt, einen zweiten Riemenabschnitt des Riemens, welcher dem Laufrad abgewandt ist, in Abhängigkeit des Halteabstands vorzuspannen.

Der Riemenspanner sorgt für eine konstante Riemenspannung, um eine effiziente Übertragung der Haltekraft auf die Behälter zu ermöglichen. Des Weiteren ermöglicht der Riemenspanner, den Riemen abhängig von dem einzustellenden Halteabstand und damit abhängig von den zu transportierenden Behältern auf Spannung zu halten.

Besonders vorteilhaft ist, wenn der Riemenspanner über einen Hydraulikzylinder oder einem Pneumatikzylinder antreibbar ist.

Ein Antrieb für den Riemenspanner bietet den Vorteil einer automatischen Anpassung der Riemenspannung in Echtzeit, was eine stets optimale Spannung gewährleistet und manuelle Einstellungen überflüssig macht. Dies führt zu einer verbesserten Effizienz und Zuverlässigkeit der Versatzvorrichtung, da er Vibrationen reduziert und den Verschleiß sowohl des Riemens als auch der angrenzenden Komponenten minimiert.

Dabei ist der Vorteil eines Pneumatikzylinders zum Antrieb des Riemenspanners eine schnelle Reaktionsfähigkeit und der reibungslose Betrieb bei unterschiedlichen Geschwindigkeiten, was eine flexible Anpassung der Riemenspannung ermöglicht.

Im Gegensatz dazu bietet der Antrieb mittels Hydraulikzylinder den Vorteil einer hohen Kraftdichte, wodurch auch in anspruchsvollen Anwendungen große Spannkräfte erzeugt werden können, ohne dass der Platzbedarf erheblich steigt.

Zur Erhöhung der Sicherheit kann an dem Riemenspanner der Riemeneinheit eine Feder vorgesehen sein. Diese Feder sichert die Position des Riemenspanners im Notfall, indem sie eine elastische Rückhaltfunktion bietet. Im Falle eines Ausfalls der Riemeneinheit bzw. der Versatzvorrichtung oder bei plötzlichem Druckabfall in dem Pneumatik- oder Hydraulikzylinder kann die Feder sicherstellen, dass der Riemenspanner in einer definierten Position bleibt, sodass der Riemen nicht zu locker oder zu fest gespannt wird. Dies verhindert nicht nur Schäden an den Komponenten, sondern sorgt auch dafür, dass die Versatzvorrichtung im Notfall weiterhin funktionsfähig bleibt, bis eine manuelle Wartung oder Reparatur möglich ist.

In einer weiteren Ausgestaltung kann die Halteeinheit der Versatzvorrichtung eine Rolleneinheit mit einer Vielzahl nebeneinander angeordneter Rollen oder Walzen aufweisen, deren Rotationachsen parallel zur Drehachse des Laufrades angeordnet sind. Die Haltekraft zum Versetzen der Behälter wird mittels Druck auf die Rollen bzw. Walzen erzeugt. Dieser Druck kann mittels eines Hydraulikzylinders oder eines Pneumatikzylinders oder einer Feder auf die Rolleneinheit aufgebracht werden. Denkbar ist auch, dass die Rollen oder Walzen jeweils eigene Hydraulikzylinder oder Pneumatikzylinder oder Federn aufweisen. Dies erhöht die Flexibilität der Halteeinheit, da behälterspezifisch Druck aufgebracht werden kann, wenn jeder Behälter unterschiedlich ausgebildet ist.

In einer weiteren vorteilhaften Ausgestaltung der Versatzvorrichtung ist das drehbare Laufrad antriebslos.

In dieser Ausgestaltung ist das Laufrad so ausgelegt und gelagert, dass die Drehung des Laufrades durch den kontinuierlichen Behälterstrom erzeugt wird, insbesondere durch die von einem Förderband aufgebrachte Kraft, die über die Behälter auf das Laufrad übertragen wird. Insbesondere ist das Laufrad aus einem leichten Kunststoffmaterial und weist somit ein geringes Gewicht auf, wodurch eine leichte Mitnahme durch den Behälterstrom vereinfacht wird.

Dabei ist es auch denkbar, dass das Laufrad einen Antrieb aufweist, um die Rotation und den Antrieb durch den Behälterstrom zu unterstützen. Dies ist besonders vorteilhaft bei kleinen und leichten Behältern, deren Behälterstrom das Laufrad nicht von allein in Bewegung setzen kann.

Des Weiteren kann es bei der Versatzvorrichtung von Vorteil sein, wenn das drehbare Laufrad mindestens eine Konturscheibe aufweist, wobei die Kontur der Konturscheibe den zu versetzenden Behältern entspricht.

Dabei unterstützt die Kontur die Haltekraft im Versatzabschnitt und führt zu einem sicheren Halten der Behälter während des gesamten Prozesses des Versetzens.

Sind mehrere Konturscheiben vorgesehen, so können diese beabstandet zueinander sein. Dabei ist der Bereich zwischen den Konturscheiben zylindrisch. Besonders vorteilhaft kann es dabei sein, wenn der Abstand mindestens der Riemenbreite oder der Höhe der Rollen bzw. Walzen entspricht, so kann der zylindrische Bereich zwischen zwei Konturscheiben den Riemen stützen, wenn keine Behälter transportiert bzw. versetzt werden.

In einer weiteren vorteilhaften Ausgestaltung kann die Kontur der Konturscheibe flexibel einstellbar sein.

Dabei kann der Konturbereich aus einem elastischen Material gebildet sein und sich somit flexibel an die Kontur der zu transportierenden Behälter anpassen. Diese Ausgestaltung stellt dennoch die ausreichende Haltekraft zum sicheren Versetzen der Behälter sicher. Dies ist besonders vorteilhaft für Behälter deren Form nicht zylindrisch oder im Wesentlichen zylindrisch ist.

In einer weiteren Ausgestaltung der Versatzvorrichtung, ist eine erste Einlaufschiene an der Halteeinheit und eine der ersten Einlaufschiene gegenüberliegende zweite Einlaufschiene im Einlaufabschnitt des Laufrads vorgesehen. Dabei sind die erste und die zweite Einlaufschiene in dem Halteabstand zueinander angeordnet, um die Behälter zwischen der Halteeinheit und das Laufrad zu führen.

Zusätzlich oder alternativ ist eine erste Auslaufschiene an der Halteeinheit und eine der ersten Auslaufschiene gegenüberliegende zweite Auslaufschiene im Auslaufabschnitt des Laufrads vorgesehen. Dabei sind die erste und die zweite Auslaufschiene in dem Halteabstand angeordnet, um die Behälter in die Transportrichtung zu führen.

Die erste Einlaufschiene kann dabei in vorteilhafterweise im Bereich der ersten Umlenkeinheit angeordnet sein. Die erste Auslaufschiene kann dabei in vorteilhafterweise im Bereich der zweiten Umlenkeinheit angeordnet sein.

Die zweite Einlaufschiene bzw. die zweite Auslaufschiene ist dabei nicht fest mit dem Laufrad verbunden, um ein Rotieren des Laufrades zu gewährleisten. Dabei ist zur Positionierung der zweiten Ein- bzw. Auslaufschiene eine Halterung vorgesehen.

In einer weiteren Ausgestaltung der Versatzvorrichtung kann es von Vorteil sein, wenn der Versatzabstand des Versatzabschnittes des drehbaren Laufrads mindestens 120%, vorzugsweise mindestens 150%, weiter vorzugsweise mindestens 170%, eines Durchmessers des Behälters bzw. der Behälter entspricht. Dabei kann vorgesehen sein, dass der Versatzabstand zumindest größer als 50% der Breite des Förderbands ist.

Dies stellt bei einer mittige Anordnung der Behälter auf dem Förderband sicher, dass der Versatz ausreichend ist, um die Behälter von dem Förderband zu entfernen, um so einen defekten Tei des Behälters durch Schwerkraft zu entfernen.

Des Weiteren kann es bei der Versatzvorrichtung von Vorteil sein, wenn im Bereich des Versatzabschnitts unterhalb der Behälter, das heißt in Schwerkraftrichtung, ein Auffangbehälter zum Auffangen zerstörter Behälterteile oder eine Markiereinheit zum Markieren der Behälter oder eine Messeinheit zum Messen von Eigenschaften der Behälter vorgesehen ist.

Dabei stellt der Auffangbehälter sicher, dass die fallenden Behälterteile gesammelt werden. Des Weiteren ist es denkbar, dass die Versatzvorrichtung nicht nur zum Aussortieren defekter Behälter verwendet werden kann, sondern um den Flaschenboden zu markieren, indem beispielsweise ein QR-Code oder ähnliches aufgebracht wird. Denkbar ist auch, dass die Versatzvorrichtung zum Durchführen von Messungen an den Behältern verwendet wird. Dabei kann beispielsweise eine Verschleißmessung durchgeführt werden.

Ein zweiter Aspekt der Erfindung ist eine Transportvorrichtung zum Transportieren von Behältern, insbesondere flaschenartigen Behältern. Die Transportvorrichtung weist mehrere Greifeinrichtungen zum Greifen, Halten und Führen von flaschenartigen Behältern auf, wobei die Greifeinrichtungen Betätigungselemente aufweisen. Zusätzlich weist die Transportvorrichtung eine Trägerplatte zum Aufnehmen der Greifeinrichtungen mit einer Ansteuerungseinheit zum Ansteuern der Betätigungselemente, und eine Einlaufführung zum Führen der Behälter zu den Greifeinrichtungen auf. Des Weiteren sieht die Transportvorrichtung eine Höhenerfassungseinheit zum Erfassen der Höhe der Behälter vor, wobei die Höhenerfassungseinheit an einer der Trägerplatte abgewandten Seite der Einlaufführung angeordnet ist.

Diese Transportvorrichtung ermöglicht es, Behälter deren Höhe nicht mit den Vorgaben zum Weitertransport übereinstimmen mittels der Höhenerfassungseinheit zu erfassen und dementsprechend auszusortieren. Dabei kann es sich beispielsweise um defekte Behälter im Behälterstrom handeln, welche eine niedrigere Höhe als reguläre ganze Behälter aufweisen, von der Höhenerfassung nicht oder als zu klein erkannt werden, und aussortiert werden. Dies ist zum Beispiel dann der Fall, wenn ein Bodenelement eines Behälters nicht mehr vorhanden ist, da dieser durch die beschriebene Versatzvorrichtung aus dem Behälterstrom entfernt worden ist.

Dabei ist der Abstand zwischen Höhenerfassungseinheit und den Greifeinrichtungen in Transportrichtung der Behälter so zu wählen, dass zwischen dem Erfassen der Höhe und dem Betätigen der Greifeinrichtungen ausreichend Zeit ist, um die Greifeinrichtung entsprechend anzusteuern, so dass die Behälter, wenn sie als "ganz" erkannt werden, gegriffen werden und wenn sie als "defekt" erkannt werden, nicht gegriffen werden. Wird ein defekter Behälter erkannt, so wird das Schließen der Greifeinrichtungen nicht veranlasst.

In einer Ausführungsform werden die als defekt erkannten Behälter an den Greifeinrichtungen vorbei befördert, z.B. mittels eines Förderbands. Diese Behälter werden somit aus dem Behälterstrom aussortiert.

Besonders vorteilhaft bei der Transportvorrichtung ist es, wenn die Höhenerfassungseinheit eine Lichtschranke ist.

Ein Vorteil einer Lichtschranke ist ihre hohe Genauigkeit und Zuverlässigkeit beim Erkennen von Objekten, da sie basierend auf der Unterbrechung eines Lichtstrahls arbeitet. Dies ermöglicht eine schnelle Reaktionszeit und präzise Auslösungen in Transportvorrichtung, während sie gleichzeitig unempfindlich gegenüber Umwelteinflüssen wie Verschmutzung ist.

Bei der Transportvorrichtung kann es besonders vorteilhaft sein, wenn die Ansteuerungseinheit steuerbar ist. Dies ermöglicht ein genaues reagieren der Greifeinrichtung, wenn die Höhenerfassungseinheit einen defekten Behälter erfasst, der nicht den Höhenvorgaben entspricht.

Des Weiteren kann es bei der Transportvorrichtung vorteilhaft sein, wenn eine Kontrolleinheit vorgesehen ist, um die erfassten Höhen der Behälter mittels der Höhenerfassungseinheit zu verarbeiten und in Abhängigkeit der erfassten Höhen, das Öffnen und Schließen der Greifeinrichtung zu steuern und/oder zu kontrollieren.

Dies verbessert und erhöht die Genauigkeit der Steuerung des Öffnens und Schließens der Greifeinrichtungen in Abhängigkeit der erfassten Höhen der Höhenerfassungseinheit.

Ein dritter Aspekt der Erfindung ist ein Transportsystem zum Transportieren von Behältern, insbesondere flaschenartigen Behältern, mit einem Förderband zum Bewegen der Behälter durch das Transportsystem und einer Versatzvorrichtung gemäß dem ersten Aspekt der Erfindung. Zusätzlich oder alternativ ist eine Transportvorrichtung gemäß dem zweiten Aspekt der Erfindung vorgesehen. Sind sowohl die Versatzvorrichtung als auch Transportvorrichtung vorgesehen, dann ist die Versatzvorrichtung der Transportvorrichtung in Transportrichtung der Behälter vorgelagert.

Ein vierter Aspekt der Erfindung ist ein Verfahren zum Aussortieren defekter Behälter mittels eines Transportsystems gemäß dem dritten Aspekt der Erfindung, wobei die folgenden Schritte ausgeführt werden:
- Transportieren einer Vielzahl von Behältern auf dem Förderband, insbesondere in der Transportrichtung,
- Einlauf der Vielzahl von Behältern in die Versatzvorrichtung gemäß dem ersten Aspekt der Erfindung,
- Versetzen der Behälter in der Versatzvorrichtung entlang des Versatzpfads (VP), so dass ein Teil eines defekten Behälters aufgrund der Schwerkraft entfernt wird, insbesondere durch Abfallen des entfernten Teils,
- Auslauf der Vielzahl von Behältern aus der Versatzvorrichtung auf das Förderband,
- Weitertransport der Vielzahl von Behältern zu der Transportvorrichtung gemäß dem zweiten Aspekt der Erfindung,
- Erfassen der Höhe der Behälter mittels der Höhenerfassungseinheit, wobei wenn eine Höhe erfasst wird, ein ganzer Behälter vorliegt, sodass die Ansteuerungseinheit, insbesondere mittels der Kontrolleinheit, zum Greifen des Behälters durch Schließen der Greifeinrichtung angesteuert wird, und wenn keine Höhe erfasst wird, ein defekter Behälter vorliegt, sodass die Ansteuerungseinheit nicht angesteuert wird, und die Greifeinrichtung geöffnet bleibt.

Weitere Ausführungsformen ergeben sich aus den Unteransprüchen.

Nachfolgend wird die Erfindung anhand von Ausführungsbeispielen näher beschrieben, die anhand der Abbildungen näher erläutert werden. Hierbei zeigen:
- Fig. 1: eine schematische Darstellung einer Versatzvorrichtung in einer Draufsicht;
- Fig. 2: eine schematische Darstellung einer Versatzvorrichtung in einer Schnittansicht einer Vorderansicht;
- Fig. 3: eine schematische Darstellung einer Versatzvorrichtung in einer isometrischen Darstellung;
- Fig. 4: eine schematische Darstellung einer Transportvorrichtung in einer Draufsicht;
- Fig. 5: eine schematische Darstellung einer Transportvorrichtung in einer Seitenansicht;
- Fig. 6: eine schematische Darstellung eines Transportsystems in einer isometrischen Darstellung;
- Fig. 7: eine schematische Darstellung eines Verfahrens.

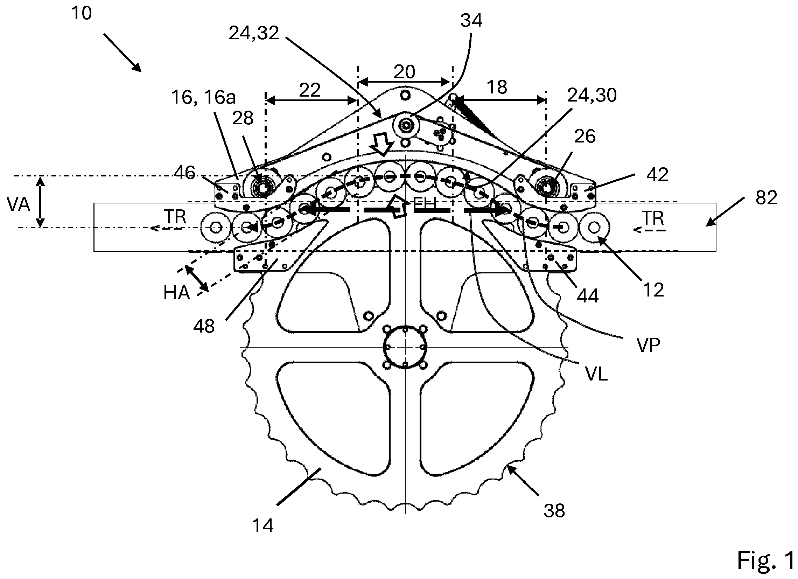

In den Fig. 1 bis 3 ist eine Versatzvorrichtung 10 zum Versetzen von Behältern 12, insbesondere flaschenartigen Behältern 12, von einem Förderband 82 eines Transportsystems 80 aus einer Transportrichtung TR der Behälter 12 gezeigt. Vorliegend sind zum Verständnis sowohl das Förderband 82 als auch die Behälter 12 mit dargestellt.

Die Versatzvorrichtung 10 weist ein drehbares Laufrad 14 und eine Halteeinheit 16 auf, welche vorliegend als Riemeneinheit 16a ausgebildet ist. Dabei ist zwischen dem drehbaren Laufrad 14 und der Halteeinheit 30 ein Versatzpfad VP mit einem Einlaufabschnitt 18, einem Versatzabschnitt 20 und einen Auslaufabschnitt 22 zum Versetzen der Behälter 12 von dem Förderband 82 definiert.

In einem Versatzvorgang sind die Behälter 12 zwischen der Halteeinheit 16 und dem Laufrad 14 radial in einem Halteabstand HA haltbar. Wie in der Darstellung gemäß der Fig. 1 bis 3 zu erkennen, sind das Laufrad 14 und die Halteeinheit 16 so angeordnet, dass die Behälter 12 von dem Einlaufabschnitt 18 in den Versatzabschnitt 20 und von dem Versatzabschnitt 20 in den Auslaufabschnitt 22 geführt werden. Dabei ist der Versatzabschnitt 20 in einem Versatzabstand VA parallel versetzt zu einer Verbindunglinie VL zwischen dem Einlaufabschnitt 18 und dem Auslaufabschnitt 22 angeordnet.

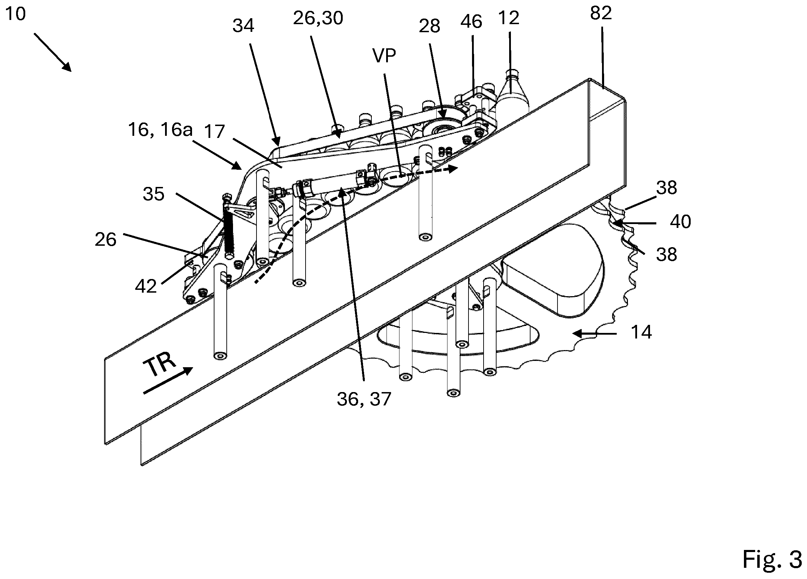

Die Verbindungslinie VL ist über dem Förderband 82 des Transportsystems und der Versatzabschnitt außerhalb des Förderbandes angeordnet. Dieser Versatzabstand VA sorgt dafür, dass die Behälter 12 im Versatzabschnitt 20 nicht mehr auf dem Förderband geführt werden, sondern in der Luft gehalten werden, wie in Fig. 3 zu sehen. Der Versatzabstand VA des Versatzabschnittes 20 entspricht dabei mindestens 120% eines Durchmessers des Behälters 12 bzw. der Behälter 12. In diesem Versatzabschnitt 20 können dann Teile von defekten Behältern 12 aufgrund der Schwerkraft FG nach unten fallen. Durch das gerichtete bzw. geplante Abfallen der Teile der defekten Behälter 12b, wird verhindert, dass diese Teile ungeplant in eine Baueinheit des Transportsystems 80 fallen und dort Schäden anrichten. Dabei ist unterhalb des Versatzabschnitts, d.h. in Fallrichtung der Teile der defekten Behälter 12b ein Auffangbehälter 50 angeordnet, um diese Teile aufzufangen und zu sammeln.

Des Weiteren weist die Riemeneinheit 16 der Versatzvorrichtung 10 einen Riemen 24 und zumindest eine erste und eine zweite Umlenkeinheit 26, 28 auf. In dem dargestellten Ausführungsbeispiel werden die Umlenkeinheiten 26, 28 durch Umlenkrollen gebildet.

Ein erster Riemenabschnitt 30 des Riemens 24 verläuft zwischen der zumindest einen ersten und zweiten Umlenkeinheit 26, 28 und ist dem Laufrad 14 zugeordnet. Der erste Riemenabschnitt 30 ist dabei radial in einem Halteabstand HA zu dem drehbaren Laufrad 14 anordenbar. Dabei ist, wie durch die beispielhaft dargestellten Behälter 12 in Fig. 1, gezeigt, dass der Halteabstand HA auf die zu versetzenden Behälter 12 einstellbar ist, um während eines Versatzvorgangs die Behälter 12 zwischen dem ersten Riemenabschnitt 30 und dem drehbaren Laufrad 14 mittels einer Haltekraft FH zu halten.

Für eine Vorspannung des Riemens 24 bzw. eine Anpassung der Vorspannung an den Durchmesser der Behälter 12, ist ein Riemenspanner 34 vorgesehen. Der Riemenspanner 34 ist vorliegend dazu ausgelegt, einen zweiten Riemenabschnitt 32 des Riemens 24, welcher dem Laufrad 14 abgewandt ist, in Abhängigkeit des Halteabstand HA vorzuspannen. Der Riemenspanner 34 ist zwischen den Umlenkeinheiten 26, 28 und versetzt zu den Umlenkeinheiten 26, 28 angeordnet. Der Riemenspanner 34 kann dabei über einen Hydraulikzylinder 36 als auch über einen Pneumatikzylinder 37 antreibbar sein. Falls es zu einem Ausfall des Hydraulikzylinders 36 oder des Pneumatikzylinders 37 kommt, kann mittels der Feder 35 die Position des Riemenspanners 34 gehalten werden.

Die Riemeneinheit 16 umfasst eine Basis 17, an welcher die Umlenkeinheiten 26, 28, der Riemenspanner 34, sowie der Pneumatikzylinder 37 bzw. der Hydraulikzylinder 36 befestigt sind.

Das drehbare Laufrad 14 wird durch den durchtransportieren Behälterstrom in Bewegung gesetzt und um seine Achse rotiert, das heißt, das drehbare Laufrad 14 selbst ist antriebslos. Wird der Behälterstrom langsamer, dann wird automatisch die Rotation des drehbaren Laufrads 14 reduziert. Das drehbare Laufrad 14 wird somit indirekt über das Förderband angetrieben.

Wie in den Fig. 1 bis 3 dargestellt, weist das drehbare Laufrad 14 mindestens eine Konturscheibe 38 auf, wobei die Kontur der Konturscheibe 38 den zu versetzenden Behältern 12 entspricht. Diese Kontur kann dabei fest vorgegeben sein. Möglich ist allerdings auch eine flexibel einstellbare Konturscheibe 38, wobei ein flexibles Material vorsehbar ist, welches sich an die Außenkontur der Behälter 12 anpassen kann.

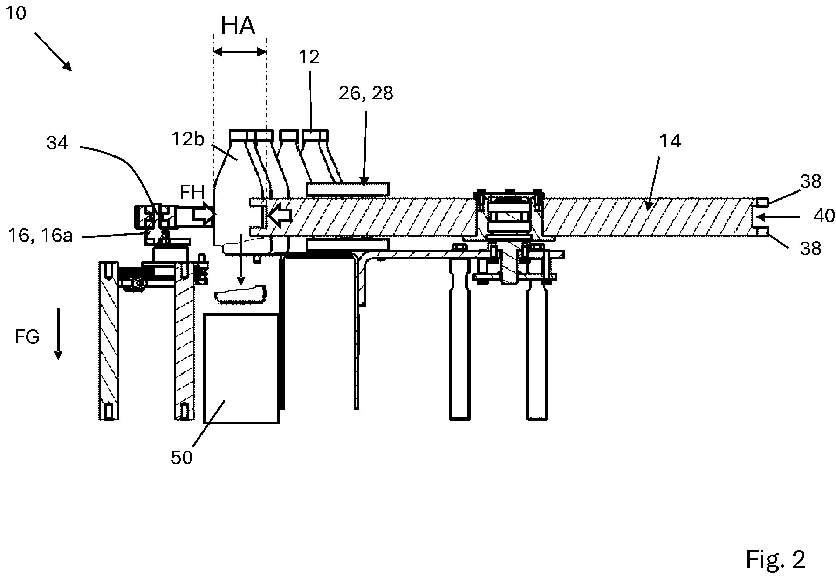

In Fig. 2 und 3 ist dargestellt, dass das Laufrad zwei Konturscheiben 38 aufweist, welche einen zylindrischen Bereich 40 zwischen sich aufweisen. Der zylindrische Bereich 40 ist dabei so ausgelegt, dass der zylindrische Bereich 40 den ersten Riemenabschnitt 30 des Riemens 24 aufnehmen kann, sollten sich keine Behälter in der Versatzvorrichtung 10 befinden.

Des Weiteren sieht die Versatzvorrichtung 10 vor, dass eine erste Einlaufschiene 42 an der Riemeneinheit 16, und eine der ersten Einlaufschiene 42 gegenüberliegende zweite Einlaufschiene 44 im Einlaufabschnitt 18 des Laufrads 14 vorgesehen ist. Dabei sind die erste und die zweite Einlaufschiene 42, 44 in dem Halteabstand HA zueinander angeordnet, um die Behälter 12 zwischen den Riemen 24 und das Laufrad 14 zu führen.

Zusätzlich weist die Versatzvorrichtung 10 eine erste Auslaufschiene 46 an der Riemeneinheit 16, und eine der ersten Auslaufschiene 46 gegenüberliegende zweite Auslaufschiene 48 im Auslaufabschnitt 22 des Laufrads 14 auf. Die erste und die zweite Auslaufschiene 46, 48 sind in dem Halteabstand HA angeordnet, um die Behälter 12 in die Transportrichtung TR zu führen.

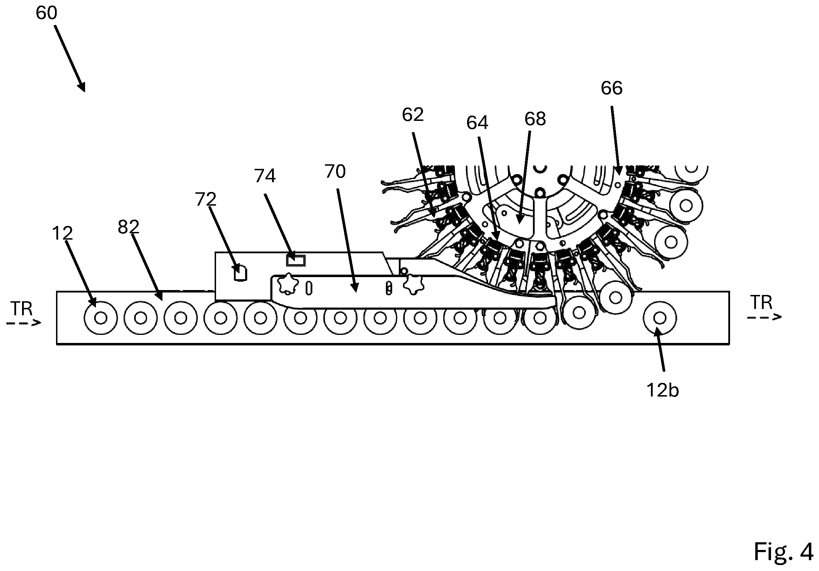

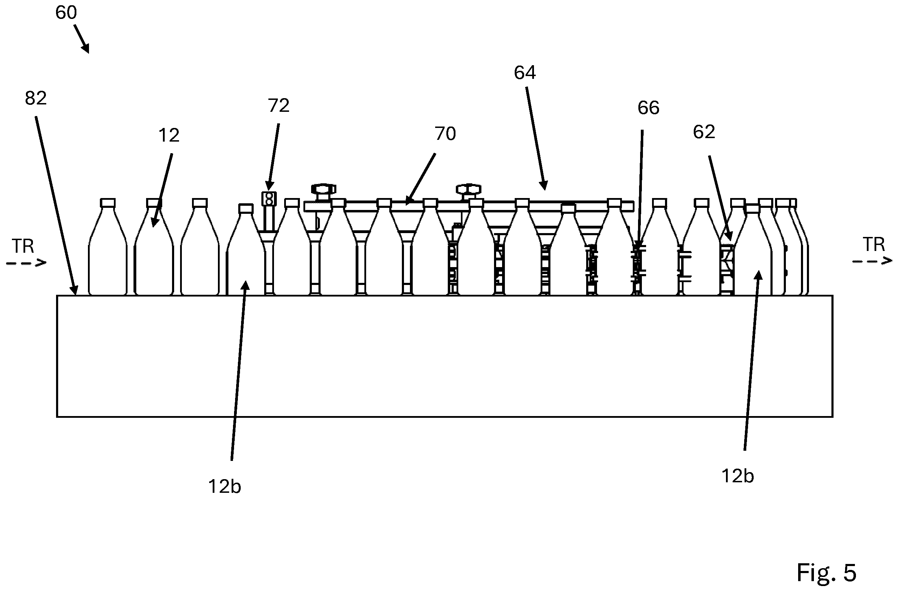

In den Figuren 4 und 5 ist eine Transportvorrichtung 60 zum Transportieren von Behältern 12, insbesondere flaschenartigen Behältern 12 dargestellt. Die Transportvorrichtung 10 weist mehrere Greifeinrichtungen 62 zum Greifen, Halten und Führen von flaschenartigen Behältern 12 auf, wobei die Greifeinrichtungen 62 Betätigungselemente 64 aufweisen. Weiter weist die Transportvorrichtung 10 eine Trägerplatte 66 zum Aufnehmen der Greifeinrichtungen 62 mit einer steuerbaren Ansteuerungseinheit 68 zum Ansteuern der Betätigungselemente 62 auf.

Um die Behälter 12 zu den Greifeinrichtungen 62 zu führen, ist eine Einlaufführung 70 vorgesehen. Des Weiteren ist eine Lichtschranke als Höhenerfassungseinheit 72 zum Erfassen der Höhe der Behälter 12 vorgesehen, wobei die Höhenerfassungseinheit 72 an einer der Trägerplatte 66 abgewandten Seite der Einlaufführung 70 angeordnet ist. Mittels der Höhenerfassungseinheit 72 kann erfasst werden, ob die Behälter 12 die richtige Höhe haben oder nicht oder ob ein Behälter 12 fehlt.

Die Kontrolleinheit 74 ist dazu ausgebildet, die erfasste Höhe der jeweiligen Behälter 12 zu verarbeiten und in Abhängigkeit der erfassten Höhen das Öffnen und Schließen der Greifeinrichtung 62 zu steuern und/oder zu kontrollieren.

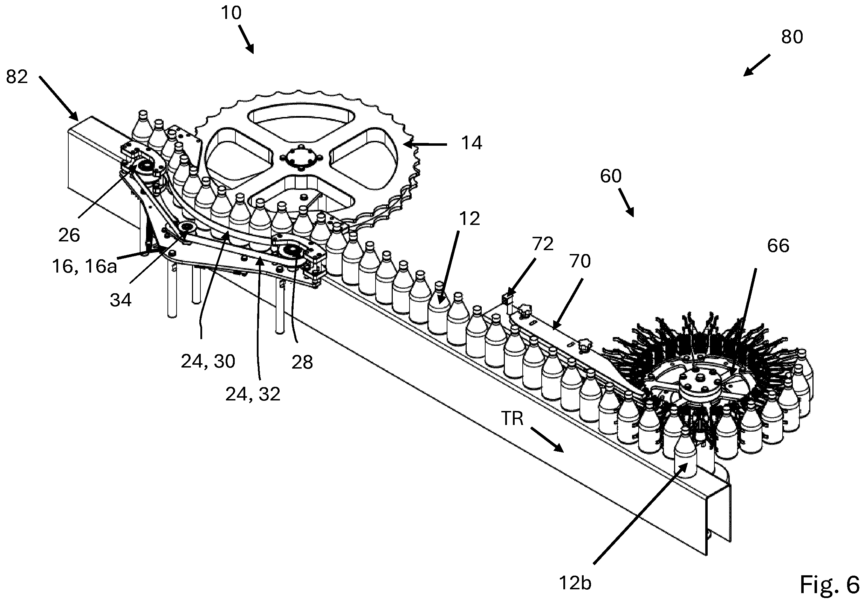

In Fig. 6 ist ein Transportsystem 80 zum Transportieren von Behältern 12, insbesondere flaschenartigen Behältern 12 dargestellt. Das Transportsystem 80 umfasst ein Förderband 82 zum Bewegen der Behälter durch das Transportsystem 80, eine Versatzvorrichtung 10, wie in den Fig. 1 bis 3 dargestellt, sowie eine Transportvorrichtung 60 gemäß einer der Fig. 4 oder 5. Dabei ist die Versatzvorrichtung 10 der Transportvorrichtung 60 in Transportrichtung TR der Behälter 12 vorgelagert.

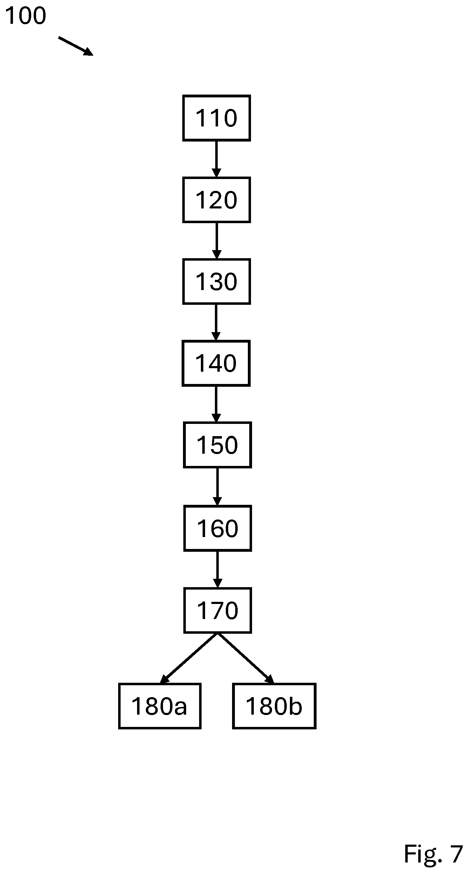

Die Figur 7 zeigt schematisch das Verfahren 100 zum Aussortieren defekter Behälter 12b mittels des beschriebenen Transportsystems 80, wobei die folgenden Schritte ausgeführt werden:
- Transportieren 110 einer Vielzahl von Behältern 12 auf dem Förderband 82 in der Transportrichtung TR,
- Einlauf 120 der Vielzahl von Behältern 12 in die Versatzvorrichtung 10 gemäß einem der Fig. 1 bis 3,
- Versetzen 130 der Behälter 12 in der Versatzvorrichtung 10 entlang des Versatzpfades VP, so dass ein Teil eines defekten Behälters 12 aufgrund der Schwerkraft FG entfernt wird,
- Auslauf 140 der Vielzahl von Behältern 12 aus der Versatzvorrichtung 10 auf das Förderband 82,
- Weitertransport 150 der Vielzahl von Behältern 12 zu der Transportvorrichtung 60 gemäß der Fig. 4 oder 5,
- Erfassen 160 der Höhe der Behälter 12 mittels der Höhenerfassungseinheit 72, wobei wenn eine Höhe erfasst wird, ein ganzer Behälter 12 vorliegt, sodass die Ansteuerungseinheit 68, insbesondere mittels der Kontrolleinheit 74, zum Greifen des Behälters 12 durch Schließen 180a der Greifeinrichtung 62 angesteuert wird, und wenn keine Höhe erfasst wird, ein defekter Behälter 12b vorliegt, sodass die Ansteuerungseinheit 68 nicht angesteuert wird, und die Greifeinrichtung 62 geöffnet 180b bleibt.

### Bezugszeichenliste

- 10: Versatzvorrichtung
- 12: Behältern
- 12b: defekter Behälter
- 14: Laufrad
- 16: Halteeinheit
- 16a: Riemeneinheit
- 18: Einlaufabschnitt
- 20: Versatzabschnitt
- 22: Auslaufabschnitt
- 24: Riemen
- 26: erste Umlenkeinheit
- 28: zweite Umlenkeinheit
- 30: erster Riemenabschnitt
- 32: zweiter Riemenabschnitt
- 34: Riemenspanner
- 35: Feder
- 36: Hydraulikzylinder
- 37: Pneumatikzylinder
- 38: Konturscheibe
- 40: zylindrischer Bereich
- 42: erste Einlaufschiene
- 44: zweite Einlaufschiene
- 46: erste Auslaufschiene
- 48: zweite Auslaufschiene
- 50: Auffangbehälter
- 60: Transportvorrichtung
- 62: Greifeinrichtung
- 64: Betätigungselemente
- 66: Trägerplatte
- 68: Ansteuerungseinheit
- 70: Einlaufführung
- 72: Höhenerfassungseinheit
- 74: Kontrolleinheit
- 80: Transportsystems
- 82: Förderband
- 100: Verfahren
- 110: Transportieren
- 120: Einlauf
- 130: Versetzen
- 140: Auslauf
- 150: Weitertransport
- 160: Erfassen
- 170: Steuern
- 180a: Schließen
- 180b: Offen bleiben

- TR: Transportrichtung
- VP: Versatzpfad
- VA: Versatzabstand
- VL: Verbindungslinie
- HA: Halteabstand
- FH: Haltekraft
- FG: Schwerkraft

## Patentansprüche

1. Versatzvorrichtung (10) zum Versetzen von Behältern (12), insbesondere flaschenartigen Behältern (12), von einem Förderband (82) eines Transportsystems (80),
wobei die Versatzvorrichtung (10) ein drehbares Laufrad (14) und eine Halteeinheit (16) aufweist, wobei zwischen dem drehbaren Laufrad (14) und der Halteeinheit (16) ein Versatzpfad (VP) mit einem Einlaufabschnitt (18), einem Versatzabschnitt (20) und einen Auslaufabschnitt (22) zum Versetzen der Behälter (12) von dem Förderband (82) definiert ist,
wobei in einem Versatzvorgang die Behälter (12) zwischen der Halteeinheit (16) und dem Laufrad (14) radial in einem Halteabstand (HA) haltbar sind, und
wobei das Laufrad (14) und die Halteeinheit derart angeordnet sind, um die Behälter (12) von dem Einlaufabschnitt (18) in den Versatzabschnitt (20) und von dem Versatzabschnitt (20) in den Auslaufabschnitt (22) zu führen, wobei der Versatzabschnitt (20) in einem Versatzabstand (VA), insbesondere parallel versetzt, zu einer Verbindunglinie (VL) zwischen dem Einlaufabschnitt (18) und dem Auslaufabschnitt (22) angeordnet ist, und wobei die Verbindungslinie (VL) über dem Förderband (82) des Transportsystems anordenbar und der Versatzabschnitt außerhalb des Förderbandes anordenbar ist.

2. Versatzvorrichtung (10) gemäß Anspruch 1,
**dadurch gekennzeichnet, dass**
die Halteeinheit (16) eine Riemeneinheit (16a) mit einem Riemen (24) und zumindest einer ersten und eine zweite Umlenkeinheit (26, 28) aufweist, vorzugsweise Umlenkrollen

3. Versatzvorrichtung (10) gemäß Anspruch 2,
**dadurch gekennzeichnet, dass**
bei der Riemeneinheit (16a) ein Riemenspanner (34) vorgesehen ist, wobei der Riemenspanner (34) ausgelegt ist, einen zweiten Riemenabschnitt (32) des Riemens (24), welcher dem Laufrad (14) abgewandt ist, in Abhängigkeit des Halteabstands (HA) vorzuspannen.

4. Versatzvorrichtung (10) gemäß einem der vorhergehenden Ansprüche, **dadurch gekennzeichnet, dass**
das drehbare Laufrad (14) antriebslos ist.

5. Versatzvorrichtung (10) gemäß einem der vorhergehenden Ansprüche, **dadurch gekennzeichnet, dass**
das drehbare Laufrad (14) mindestens eine Konturscheibe (38) aufweist, wobei die Kontur der Konturscheibe (38) den zu versetzenden Behältern (12) entspricht.

6. Versatzvorrichtung (10) gemäß Anspruch 5,
**dadurch gekennzeichnet, dass**
die Kontur der Konturscheibe (38) flexibel einstellbar ist.

7. Versatzvorrichtung (10) gemäß einem der vorhergehenden Ansprüche, **dadurch gekennzeichnet, dass**
eine erste Einlaufschiene (42) an der Halteeinheit (16), und eine der ersten Einlaufschiene (42) gegenüberliegende zweite Einlaufschiene (44) im Einlaufabschnitt (18) des Laufrads (14) vorgesehen ist, wobei die erste und die zweite Einlaufschiene (42, 44) in dem Halteabstand (HA) zueinander angeordnet sind, um die Behälter (12) zwischen die Halteeinheit (16) und das Laufrad (14) zu führen, und/oder dass eine erste Auslaufschiene (46) an der Halteeinheit (16), und eine der ersten Auslaufschiene (46) gegenüberliegende zweite Auslaufschiene (48) im Auslaufabschnitt (22) des Laufrads (14) vorgesehen ist, wobei die erste und die zweite Auslaufschiene (46, 48) in dem Halteabstand (HA) angeordnet sind, um die Behälter (12) in eine Transportrichtung (TR) der Behälter zu führen.

8. Versatzvorrichtung (10) gemäß einem der vorhergehenden Ansprüche, **dadurch gekennzeichnet, dass**
der Versatzabstand (VA) des Versatzabschnittes (20) des drehbaren Laufrads (14) mindestens 120%, vorzugsweise mindestens 150%, weiter vorzugsweise mindestens 170%, eines Durchmessers des Behälters (12) bzw. der Behälter (12) entspricht.

9. Versatzvorrichtung (10) gemäß einem der vorhergehenden Ansprüche, **dadurch gekennzeichnet, dass**
im Bereich des Versatzabschnitts (20) unterhalb der Behälter (12) ein Auffangbehälter (50) zum Auffangen zerstörter Behälterteile oder eine Markiereinheit zum Markieren der Behälter oder eine Messeinheit zum Messen von Eigenschaften der Behälter (12) vorgesehen ist.

10. Transportvorrichtung (60) zum Transportieren von Behältern (12), insbesondere flaschenartigen Behältern (12), die Transportvorrichtung (60) aufweisend
mehrere Greifeinrichtungen (62) zum Greifen, Halten und Führen von flaschenartigen Behältern (12), wobei die Greifeinrichtungen (62) Betätigungselemente (64) aufweisen, und
eine Trägerplatte (66) zum Aufnehmen der Greifeinrichtungen (62) mit einer Ansteuerungseinheit (68) zum Ansteuern der Betätigungselemente (62), und
eine Einlaufführung (70) zum Führen der Behälter zu den Greifeinrichtungen (62), sowie
eine Höhenerfassungseinheit (72) zum Erfassen der Höhe der Behälter, wobei die Höhenerfassungseinheit (72) an einem der Trägerplatte (66) abgewandten Seite der Einlaufführung (70) angeordnet ist.

11. Transportvorrichtung gemäß Anspruch 10,
**dadurch gekennzeichnet, dass**
die Höhenerfassungseinheit (72) eine Lichtschranke ist.

12. Transportvorrichtung gemäß Anspruch 10 oder 11,
**dadurch gekennzeichnet, dass**
die Ansteuerungseinheit (68) steuerbar ist.

13. Transportvorrichtung gemäß einem der Ansprüche 10 bis 12,
**dadurch gekennzeichnet, dass**
eine Kontrolleinheit (74) vorgesehen ist, die dazu ausgebildet ist, die erfassten Höhen der Behälter mittels der Höhenerfassungseinheit (72) zu verarbeiten und in Abhängigkeit der erfassten Höhen das Öffnen und Schließen der Greifeinrichtung (62) zu steuern und/oder zu kontrollieren.

14. Transportsystem (80) zum Transportieren von Behältern (12), insbesondere flaschenartigen Behältern (12), mit einem Förderband (82) zum Bewegen der Behälter durch das Transportsystem (80) und
einer Versatzvorrichtung (10) gemäß einem der Ansprüche 1 bis 9, und/oder
einer Transportvorrichtung (60) gemäß einem der Ansprüche 10 bis 13, wobei insbesondere die Versatzvorrichtung (10) der Transportvorrichtung (60) in Transportrichtung (TR) der Behälter (12) vorgelagert ist.

15. Verfahren (100) zum Aussortieren defekter Behälter (12b) mittels eines Transportsystems (80) gemäß Anspruch 14, wobei die folgenden Schritte ausgeführt werden:
- Transportieren (110) einer Vielzahl von Behältern (12) auf dem Förderband (82) in der Transportrichtung (TR),
- Einlauf (120) der Vielzahl von Behältern (12) in die Versatzvorrichtung (10) gemäß einem der Ansprüche 1 bis 9,
- Versetzen (130) der Behälter (12) in der Versatzvorrichtung (10) entlang des Versatzpfads (VP), so dass ein Teil eines defekten Behälters (12) aufgrund der Schwerkraft (FG) entfernt wird,
- Auslauf (140) der Vielzahl von Behältern (12) aus der Versatzvorrichtung (10) auf das Förderband (82),
- Weitertransport (150) der Vielzahl von Behältern (12) zu der Transportvorrichtung (60) gemäß einem der Ansprüche 10 bis 13,
- Erfassen (160) der Höhe der Behälter (12) mittels der Höhenerfassungseinheit (72), wobei wenn eine Höhe erfasst wird, ein ganzer Behälter (12) vorliegt, sodass die Ansteuerungseinheit (68), insbesondere mittels der Kontrolleinheit (74), zum Greifen des Behälters (12) durch Schließen (180a) der Greifeinrichtung (62) angesteuert wird, und wenn keine Höhe erfasst wird, ein defekter Behälter (12b) vorliegt, sodass die Ansteuerungseinheit (68) nicht angesteuert wird, und die Greifeinrichtung (62) geöffnet (180b) bleibt.
